# EUROPEAN PATENT APPLICATION

(11) **EP 2 725 276 A2**
(43) Date of publication of application: **30.04.2014**
(21) Application number: 13188165.8
(22) Date of filing: 10.10.2013
(51) Int. Cl.: F16L 33/207

(54) **Deformable socket for a hose fitting**

(30) Priority: 24.10.2012 GB 201219108
(71) Applicant: Eaton Industrial IP GmbH & Co. KG, 12529 Schönefeld (DE)
(72) Inventor: Bhoga, Ramakrishna, 411014 Pune (IN)
(74) Representative: Tabeling, Marcella M.J.

(57) **Abstract**

The invention refers to a socket (10), a method for manufacturing the socket (10), a hose fitting (21) containing the socket (10) and a method for connecting the hose fitting (21) to a hose end section (14). The socket (10) comprises a tapered sleeve (11) which is made of a first material, preferably aluminium. Inside the sleeve (11) two claming rings (12) are press fitted. The two clamping rings (12) consist of a second material, preferable a steel-allow. The yield point of the first material is lower than the yield point of the second material. The clamping force in the connected state of the socket (10) or the hose fitting (21) is mainly or only provided by the clamping rings (12). A lightweight and easy to manufacture socket (10) is provided.

## Description

The present invention refers to a deformable socket for a hose fitting. The socket can be deformed by a crimping tool in order to create a clamping force for fixing a hose end section to the hose fitting.

A plenty of different designs for sockets and hose fittings exist. GB 894 114 shows a hose fitting with a socket having a tapered section. The inner surface of the socket contains radial inwardly projecting ribs. In the deformed state the socket circumferentially presses onto the hose end section and the circumferential ribs can insert into the outer sheathing of the hose or at least deform it. In this state de to the deformation of the socket, the hose end section is clamped to the hose fitting between the socket and a nipple that is at least partly inserted into the hose end section.

Another example for a hose end fitting containing a deformable socket with circumferential ribs is shown in DE 101 26 429 B4.

It is an object of the present invention to provide a socket for a hose end fitting which is cheap and easy to manufacture. This object is achieved by providing a socket according to the features of claim 1.

According to the present invention the deformable socket comprises a sleeve having in its non-deformed initial state a tapered inner surface. The sleeve is made of a first material. Inside the sleeve at least two axially spaced clamping rings are provided. The clamping rings are press-fitted into the outer sleeve so that the outer ring surface of a clamping ring is pressed against the inner surface of the outer sleeve. The at least two clamping rings consist of a second material which is different from the first material of the sleeve. The yield point of the first material is lower than the yield point of the second material. This means that the first material is softer than the second material. The first and/or second materials can be metal and non-metals as well. Preferable, the second material is a metal or a metal alloy, particularly a steel alloy. In so doing a socket can easily be manufactured by providing a soft sleeve with a tapered inner surface and press fitting two hard clamping rings into the sleeve. In so doing it is unnecessary that the sleeve creates a clamping force that is high enough to fix the hose end section to the hose fitting. The two clamping rings provide sufficient clamping force. Accordingly, the wall thickness of the sleeve can be low. Moreover, a suitable first material for manufacturing the sleeve can more freely be selected. Preferably aluminium is used which has a low mass density. If for example a plurality of hoses and fittings is installed in a vehicle the total vehicle weight can be reduced.

The necessary radial force for deforming the two clamping rings is higher than the force needed for deforming the sleeve. The clamping force to fix the hose end section to the fitting is mainly provided by the two clamping rings. Since the size or volume of the clamping rings is much smaller than the volume of the sleeve the total weight of the socket can be remarkably reduced.

The at least two rings can be press-fitted into the socket by means of a stepped mandrel in one single stroke. The stroke of the mandrel is executed along a longitudinal axis of the sleeve. The stroke force of the mandrel determines the press-fit force and the axial position of the clamping rings with regard to the sleeve. Since the material of the sleeve is soft with regard to the second material of the clamping rings the axial position of the clamping rings can be selected and varied without the need to change the diameter of the clamping rings. The clamping rings can deform the sleeve when they are press-fitted into the sleeve until they reach their respective final axial position.

In a preferred embodiment of the socket the clamping rings can be tapered. Al-ternatively, it is also possible that the inner and the outer diameter of the clamping rings is constant. In both embodiments the average diameter of the at least two clamping rings is different.

The thickness, width, material and taper angle of the parts can be selected in dependence on the crimping force and socket application.

In one embodiment the sleeve is cup-shaped and contains a radial inward projecting flange at its end having the smaller diameter. The flange can be brought into contact with the nipple of the fitting, particularly with a stop of the nipple in order to define the axial-relative position between the sleeve and the nipple. The flange can also be used as abutment plane for the hose end.

Preferably not only the inner surface of the sleeve, but also the outer surface of the sleeve is tapered. The taper angle of the sleeve can be selected in dependence on the crimping force and socket application. The tapered form of the sleeve helps to insert the hose end section into the sleeve before crimping or deforming the sleeve to fix it to the hose end section.

Further details and advantages of the present invention can be taken from the drawing, the description and the claims. The description is limited to the main features of the invention and related information and facts. An illustrative embodiment of the invention will no be described by way of example with reference to the accompanying drawings in which:
Figure 1 shows a socket in its non-deformed initial state according to the present invention in a perspective view in longitudinal section,
Figure 2 shows the embodiment of the socket according to figure 1 in its non-deformed initial state in a different perspective view and
Figure 3 shows a longitudinal section of an embodiment of a hose fitting containing the socket according to figures 1 and 2 in its deformed clamping state.

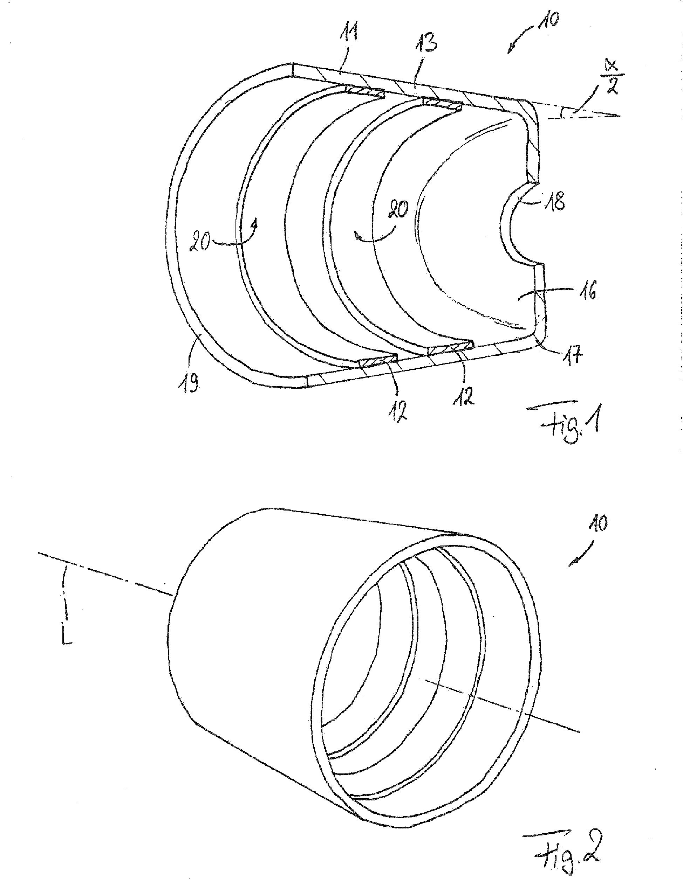

Figures 1 and 2 show a socket 10 in its non-deformed initial state consisting of a sleeve 11 and at least of two clamping rings 12. The sleeve 11 has a tapered circumferential wall 13, so that the inner and the outer surface of the circumferential wall 13 are equally tapered. The half taper angle α/2 is illustrated in figure 1.

The circumferential wall 13 has its tapered shape only in the non-deformed initial state of the socket. This is the initial state of the socket 10 before it is attached to a hose end section 14 of the fluid hose 15.

The hose 15 contains elastically deformable material, for example plastic and/or rubber or the like. It can comprise several layers depending on the application of the hose.

The socket further contains the radially inward projecting flange 16. The flange 16 is provided at the axial end 17 of the circumferential wall 13 with the smaller diameter. The flange 16 and the circumferential wall 13 are made of a single seamless part. An insert hole 18 is provided at the flange 16 coaxial to the longitudinal axis L of the circumferential wall 13 or the sleeve 11.

The sleeve 11 consists of a first material that possesses plastic ductility. Preferably the first material is selected from the group of metals. In the preferred embodiment the first material is aluminium. The sleeve can for example be manufactured by means of rod-extrusion or deep drawing. Accordingly it is possible to manufacture the sleeve 11 with low costs using a conventional press. The sleeve 11 according to the preferred embodiment has a cup-like shape in which the flange 16 corresponds to the bottom of the cup.

As illustrated in the drawings at least two clamping rings 12 are press-fitted inside the sleeve 11. The rings 12 can for example be pressed into the sleeve 11 by use of a mandrel. Preferably both clamping rings 12 are fitted into the sleeve 11 with one single stroke of a stepped mandrel, which is not shown in the drawings. The two clamping rings 12 can have a constant diameter or can alternatively have a tapered form in which the taper angle corresponds to the taper angle α of the circumferential wall 13 of the sleeve 11. In both cases the diameter - or the average diameter - of the two clamping rings 12 is different. As illustrated the two clamping rings 12 are located in the sleeve 11 at different axial positions in the direction of the longitudinal axis L of the sleeve. In other words the two clamping rings 12 are spaced from each other in axial direction. The width of the two clamping rings is preferably identical. The distance between the two clamping rings in axial direction corresponds at least to the width of the clamping rings. The length of the circumferential wall 13 between the flange 16 and the open free end 19 of the sleeve 11 corresponds in the preferred embodiment to at least four times the width of the clamping rings 12.

Each of the clamping rings 12 is made of a second material, which is different from the first material. The second material consists preferably of an alloy and particularly of a steel alloy. The yield point of the first material is lower than the yield point of the second material. In so doing the clamping rings 12 are hard enough to provide the required clamping force to press the hose end section 14 against a nipple 22 of a fitting 21 in the deformed clamping state of the socket 10. In so doing the sleeve 11 can be manufactured of a cheep and particularly of a light-weight material having a small wall thickness.

Each of the clamping rings 12 has a planar outer ring surface and a planar inner ring surface. The inner ring surface of each clamping ring 12 defines a clamping surface 20. The clamping surfaces 20 are associated to the hose end section 14.

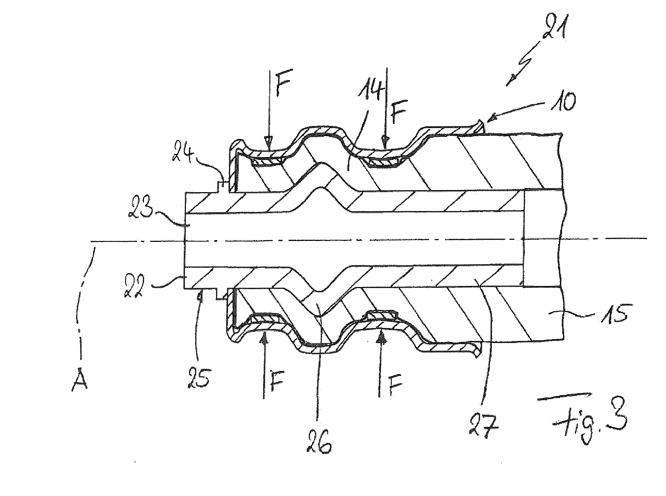

The above-described shape of socket 10 refers to the non-deformed initial state of the socket 10 as shown in figures 1 and 2. Figure 3 shows the hose fitting 21 in a connected state were the fitting 21 is fixed to the hose end section 14 of a hose 15. In figure 3 the socket 10 is in its deformed clamping state.

The hose fitting 21 according to figure 3 contains the socket 10 and a nipple 22. The nipple 22 provides a fluid channel 23 along the longitudinal axis A of the nipple 22. A stop 24 extends radially outward from the outer peripheral surface 25 of the nipple 22. The stop 24 is preferably ring-shaped.

Axially distant to the stop 24 a holding projection 26 protrudes radially away from the longitudinal axis A of the nipple 22. The projection 26 can be created by deformation of the respective wall section of the nipple 22. Preferably, a holding projection 26 provides a smooth contour without edges. The holding projection 26 is provided at a insert section 27 of the nipple which is limited by the stop 24.

To connect the hose fitting 21 to the hose end section 14 the socket 10 is placed on to the hose end section 14 until the end of the hose contacts the flange 16. Next the insert section 27 of the nipple 23 is inserted into the hose end section 14 through the insert hole 18. A crimping force F is exerted on to the outer surface of the circumferential wall 13 at the location where the clamping rings 12 are placed as this is schematically illustrated in figure 3. In so doing the sleeve 11 is deformed together with the clamping rings 12. The clamping surfaces 20 of each clamping ring 12 is pressed onto the hose end section 14, so that the hose end section 14 is clamped between the clamping surfaces 20 and the insert section 27 of the nipple 22. As illustrated in figure 3 preferably the two clamping rings 12 are placed at both sides of the holding projection 26 with view along the longitudinal axis A.

When the clamping rings 12 are deformed to provide the clamping force the sleeve 11 of the socket is deformed as well. But the first material of the sleeve can only provide a minor clamping force onto the hose end section 14 due to its soft material.

The invention refers to a socket 10, a method for manufacturing the socket 10, a hose fitting 21 containing the socket 10 and a method for connecting the hose fitting 21 to a hose end section 14. The socket 10 comprises a tapered sleeve 11 that is made of a first material, preferably aluminium. Inside the sleeve 11 two clamping rings 12 are press fitted. The two clamping rings 12 consist of a second material, preferably a steel-alloy. The yield point of the first material is lower than the yield point of the second material. The clamping force in the clamping state of the socket 10, in which the hose fitting 21 is attached to a hose end section 14, is mainly or only provided by the clamping rings 12. A lightweight and easy to manufacture socket 10 is provided.

### Parts List:

- 10: socket
- 11: sleeve
- 12: clamping ring
- 13: circumferential wall
- 14: hose end section
- 15: hose
- 16: flange
- 17: axial end of circumferential wall
- 18: insert hole
- 19: open free end
- 20: clamping surface
- 21: hose fitting
- 22: nipple
- 23: channel
- 24: stop
- 25: outer peripheral surface
- 26: holding projection
- 27: insert section

- α: taper angle
- L: longitudinal axis of sleeve
- A: longitudinal axis of nipple

## Claims

1. Deformable socket (10) for a hose fitting (21) comprising:
a sleeve (11) with a tapered inner surface in the non-deformed initial state, the sleeve (11) consisting of a first material,
and at least two axially spaced clamping rings (12) with different outer diameters consisting of a second material, the clamping rings (12) being press-fitted into the outer sleeve (11),
wherein the first material has a lower yield point than the second material.

2. Socket according to claim 1, wherein the first and/or the second material is a metal.

3. Socket according to one of the preceding claims, wherein the first material is aluminium.

4. Socket according to one of the preceding claims, wherein the second material is an alloy.

5. Socket according to one of the preceding claims, wherein the second material is a steel alloy.

6. Socket according to one of the preceding claims, wherein the clamping rings (12) are tapered in the non-deformed initial state of the socket (10).

7. Socket according to one of the preceding claims, wherein the axial position of a clamping ring (12) inside the sleeve (11) is determined by the pressing force exerted onto the clamping ring (12) to create the press-fit between the clamping ring (12) and the sleeve (11).

8. Socket according to one of the preceding claims, wherein the press-fit force between the sleeve (11) and each of the clamping rings (12) has the same amount.

9. Socket according to one of the preceding claims, wherein a ring-shaped radial flange (16) is provided at the axial end (17) of the sleeve (11) having the smaller diameter.

10. Socket according to one of the preceding claims, wherein the sleeve (11) is tapered.

11. Socket according to claims 9 and 10, wherein the sleeve (11) has a cup-like shape.

12. Method of manufacturing a socket (10) according to one of the preceding claims with the following steps:
- providing a sleeve (11) having a tapered inner surface and consisting of a first material,
- providing at least two clamping rings (12) consisting of a second material, having a yield point which is higher than of the yield point of the first material,
- press-fitting the clamping rings (12) into the sleeve (11) at different axial positions.

13. Hose fitting for a hose comprising
a deformable socket (10) according to one of the claims 1 through 12,
and a nipple (23) having an insert section (27), which is provided to be inserted into the opening of the hose end section (14).

14. Hose fitting (21) according to claim 13,
wherein the hose fitting (21) is fastened to the hose end section (14) by deforming the socket (10) so that the clamping rings (12) contact the hose (15) outer surface and create a clamping force between the socket (10) and the nipple (23) holding the hose end section (14) in-between.
